# EUROPÄISCHE PATENTSCHRIFT

(11) **EP 3 234 403 B1**
(45) Veröffentlichungstag und Bekanntmachung des Hinweises auf die Patenterteilung: **07.08.2019**
(21) Anmeldenummer: 15810667.4
(22) Anmeldetag: 17.12.2015
(51) Int. Cl.: F16D 65/097

(54) **BREMSBELAGHALTERUNG**
BRAKE PAD HOLDING ARRANGEMENT
FIXATION DE GARNITURE DE FREIN

(30) Priorität: 19.12.2014 DE 102014019114
(43) Veröffentlichungstag der Anmeldung: 25.10.2017
(73) Patentinhaber: KNORR-BREMSE Systeme für Nutzfahrzeuge GmbH, 80809 München (DE)
(72) Erfinder: NESMJANOWITSCH, Igor, 94491 Hengersberg (DE)
(86) Internationale Anmeldenummer: PCT/EP2015/080157
(87) Internationale Veröffentlichungsnummer: WO 2016/097101

(56) Entgegenhaltungen:
- EP-A1- 0 339 984
- EP-A2- 0 877 176
- DE-A1- 1 967 110
- DE-A1-102012 023 813
- DE-A1-102013 008 226
- DE-U1-202015 105 977

## Beschreibung

Die Erfindung betrifft eine Bremsbelaghalterung einer Scheibenbremse gemäß dem Oberbegriff des Anspruchs 1.

Aus der DE 40 20 287 A1 ist eine Bremsbelaghalterung entsprechend der Gattung bekannt, bei der zur Positionssicherung der beiden Bremsbeläge diese jeweils mit einer Belaghaltefeder versehen sind, die im oberen, einer Montageöffnung des Bremssattels zugewandten Randbereich derart am jeweiligen Bremsbelag befestigt sind, dass sie von einem sich quer dazu, also in Achsrichtung der Bremsscheibe erstreckenden Belaghaltebügel unter Vorspannung in den Belagschacht eines ortsfesten Bremsträgers oder eines Bremssattels gedrückt werden. Dabei ist der Belaghaltebügel in zwei sich gegenüberliegenden, die Montageöffnung begrenzenden Bereichen des Bremssattels festgelegt.

Der bekannte Belaghaltebügel ist als Blechteil ausgebildet mit einem im Wesentlichen rechteckigen Querschnitt, so dass er mit einer ebenen Unterseite an den Belaghaltefedern anliegt.

Während ein Ende des Belaghaltebügels in eine im Bremssattel vorgesehene Tasche eingesteckt ist, ist das andere Ende gabel- oder ösenförmig ausgebildet mit einer Durchstecköffnung, die von einer Nase des Bremssattels durchtreten ist, mit einer, bezogen auf die Längserstreckung des Belaghaltebügels, Querbohrung, durch die ein Sicherungsbolzen geführt ist, der sich am Belaghaltebügel abstützt. Dabei ist der Sicherungsbolzen durch eine aufgesteckte Scheibe und einen Splint oder dergleichen gegen axiales Verschieben gesichert.

Die Funktionsfähigkeit des Belaghaltebügels ist also nur mittels vieler Einzelteile, insbesondere Sicherungsteile möglich, was naturgemäß nur mit entsprechenden Beschaffungs- und Montagekosten verbunden ist.

Da Scheibenbremsen als Serienteile in großen Stückzahlen hergestellt werden, steht diese Mehrteiligkeit der stets gestellten Forderung nach einer Vereinfachung und damit Kostenreduzierung entgegen.

In der DE 10 2005 059 801 A1 ist eine gattungsfremde Bremsbelaghalterung geoffenbart, bei der als Belaghaltefedern keine Blattfedern zum Einsatz kommen, sondern aus einem Federdraht gebogene, die die Montageöffnung in Achsrichtung der Bremsscheibe überspannen.

Bei dieser Konstruktion wird auf den prinzipiellen Einsatz eines Belaghaltebügels verzichtet, der in einer Ausführungsvariante lediglich als redundantes Bauteil in Form eines Blech-Stanzteiles vorgesehen ist.

In der EP 0 877 176 A2 sowie der EP 0 339 984 A1 ist jeweils ein U-förmiger, aus einem gebogenen Draht bestehender Belaghaltebügel gezeigt und beschrieben, der jeweils mittels eines Klemmelementes, das mit dem Bremssattel verschraubt ist, am Bremssattel gehalten ist.

Eine vergleichbare Konstruktion ist aus der DE 10 2012 023813 A1 bekannt, wobei allerdings der Belaghaltebügel, gleichfalls aus einem Draht gebogen, im Verbindungsbereich mit dem Bremssattel eine besondere Ausformung aufweist, zur Halterung an einer in den Bremssattel eingedrehten Schraube.

Der Erfindung liegt die Aufgabe zugrunde, eine Bremsbelaghalterung der gattungsgemäßen Art so weiterzuentwickeln, dass sie mit einer geringeren Anzahl funktionsrelevanter Teile realisierbar ist.

Diese Aufgabe wird durch eine Bremsbelaghalterung mit den Merkmalen des Anspruchs 1 gelöst.

Eine in diesem Sinne ausgebildete Bremsbelaghalterung zeichnet sich vor allem dadurch aus, dass der Belaghaltebügel als Einzelteil funktionsfähig ist, so dass auf weitere Bauteile prinzipiell verzichtet werden kann.

Dies betrifft insbesondere die erwähnten Sicherungsteile, wie den Sicherungsbolzen, die Scheibe oder den Splint, wobei statt eines Splintes im Stand der Technik auch andere Sicherungsmittel vorgesehen sind.

In jedem Fall ist sowohl die Herstellung wie auch die Montage des Belaghaltebügels erheblich einfacher als die des bekannten Belaghaltebügels, wobei der neue, erfindungsgemäß aus einem gebogenen Draht bestehende Belaghaltebügel praktisch in einer vollautomatischen Fertigung hergestellt werden kann.

Hierzu zählt das Ablängen von einem Coil und das automatische Biegen mit einer dazu geeigneten, an sich bekannten Vorrichtung.

Als Draht bietet sich die Verwendung eines Federdrahtes an, der so gebogen ist, dass er in seiner Kontur der Umfangskontur des bekannten, aus Blech bestehenden Belaghaltebügels entspricht.

Gemäß der Erfindung sind zwei, die Montageöffnung des Bremssattels überspannende, parallel und abständig zueinander verlaufende Schenkel vorgesehen, deren eines Ende in die zum Stand der Technik beschriebene Tasche des Bremssattels eingesteckt wird, während das andere Ende zwei aufeinander zu gerichtete Stummel aufweist, die in die für den Sicherungsbolzen gedachte Querbohrung der der Tasche gegenüberliegenden Nase beidseitig eingesteckt werden, zunächst unter Aufspreizung und anschließendem Einführen, wobei die dem Federdraht innewohnenden Rückstellkräfte für einen sicheren Sitz in der Bohrung sorgen.

Durch eine hohe Betriebstemperatur, dynamische Belastung und vergleichbare Einflüsse kann die Federvorspannung des Belaghaltebügels nachlassen, so dass die Gefahr einer Aufspreizung der beiden Schenkel bzw. der Stummel besteht.

Um dies zu vermeiden, ist nach einem weiteren Gedanken der Erfindung vorgesehen, die beiden Schenkel durch eine aufgesetzte Klammer miteinander zu verbinden, die entweder bereits vor der Montage des Belaghaltebügels oder danach befestigt wird, wobei diese aus Blech bestehende Klammer im Überdeckungsbereich mit den beiden Schenkeln des Belaghaltebügels im Sinne von Rinnen ausgebildet sind, die die Schenkel jeweils bereichsweise klammernd übergreifen, so dass ein dauerhaft sicherer Halt gewährleistet ist.

Im Übrigen kann die Klammer als Auflagefläche von beispielsweise Verschleißkabeln dienen, die von den Bremsbelägen zu entsprechenden Messeinrichtungen führen.

Neben der erwähnten Vereinfachung durch eine Reduzierung der erforderlichen Bauteile, zeichnet sich die Erfindung noch dadurch aus, dass sie praktisch ohne Veränderung der Funktionsteile, wie Bremssattel, Bremsbeläge oder dergleichen montierbar ist. D.h., selbst eine nachträgliche Ausrüstung, beispielsweise bei einem Bremsbelagwechsel, ist ohne weiteres möglich.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine Bremsbelaghalterung in einer in einem Teilausschnitt dargestellten Scheibenbremse in perspektivischer Ansicht
- Figur 2: einen Teilausschnitt der Bremsbelaghalterung in einer geschnittenen Seitenansicht gemäß der Linie II-II in Figur 1
- Figur 3: ein Ausführungsbeispiel eines Belaghaltebügels gemäß der Erfindung in einer perspektivischen Ansicht
- Figur 4: eine weiteres Ausführungsbeispiel des Belaghaltebügels, ebenfalls schaubildlich dargestellt.

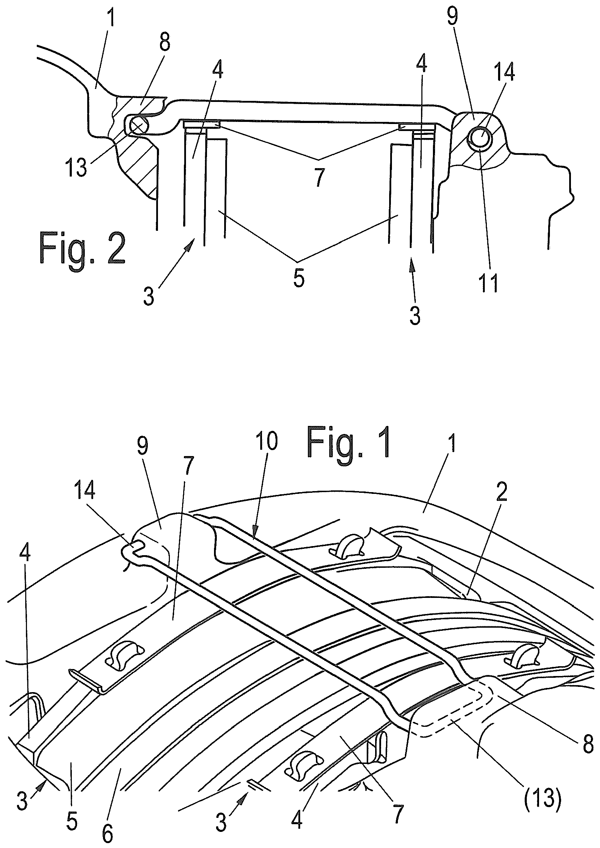

In der Figur 1 ist ein Teilausschnitt einer Scheibenbremse für ein Nutzfahrzeug dargestellt, mit einem Bremssattel 1, in dem zwei, beidseitig einer Bremsscheibe 6 zugeordnete Bremsbeläge 3 positioniert sind.

Dabei sind die Bremsbeläge, die jeweils aus einer Belagträgerplatte 4 und einem der Bremsscheibe 6 zugewandten Reibbelag 5 bestehen, mittels einer Belaghaltefeder 7 federbelastet in einem Belagschacht eines ortsfesten, nicht dargestellten Bremsträgers oder in dem Bremssattel 1 gehalten.

Die jeweilige Belaghaltefeder 7 erstreckt sich quer zur Achsrichtung der Bremsscheibe 6 und ist radial auslenkbar an der Belagträgerplatte 4 befestigt.

Mittels eines sich in Achsrichtung der Bremsscheibe 6 erstreckenden, eine Montageöffnung 2 des Bremssattels 1 überspannenden Belaghaltebügels 10, der sich an den Belaghaltefedern 7 abstützt, sind diese unter Vorspannung gesetzt, so dass die Bremsbeläge 3 gegen den Grund des Belagschachtes gedrückt werden.

Erfindungsgemäß besteht der Belaghaltebügel 10 aus einem gebogenen Draht und ist mit einem Ende in einer Tasche 8 des Bremssattels 1 und mit seinem anderen Ende an einer an den Bremssattel 1 angeformten Nase 9 festgelegt, wie dies in der Figur 2 deutlich zu erkennen ist.

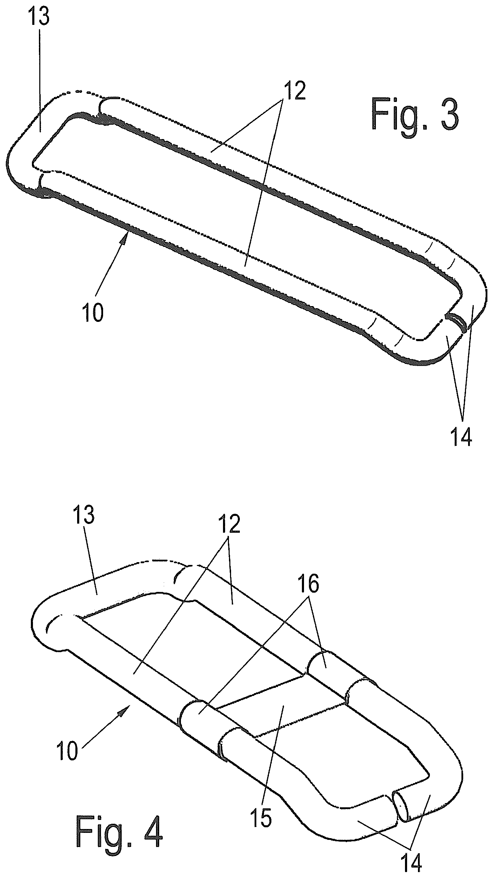

In den Figuren 3 und 4 ist der Belaghaltebügel 10 jeweils als Einzelteil dargestellt. Es ist zu erkennen, dass der Belaghaltebügel 10 aus zwei parallel und abständig zueinander verlaufenden Schenkeln 12, einem diese an einem Ende verbindenden Steg 13 sowie am anderen Ende aufeinander zu gerichteten, abgewinkelten Stummeln 14 besteht.

Während die Schenkel 12 an den Belaghaltefedern 7 anliegen, ist der Steg 13 in die Tasche 8 eingesteckt. Die Stummel 14 sind in seitlich der Nase vorgesehenen Querbohrungen 11 eingeführt, wobei zur Montage die Schenkel 12 und damit die Stummel 14 zunächst so weit gespreizt werden, dass eine Einführung in die Querbohrungen 11 problemlos möglich ist.

Durch die vor allem dann, wenn der Belaghaltebügel 10 aus einem Federdraht gebildet ist, vorhandenen Rückstellkräfte, werden die Stummel 14 gegeneinander gedrückt und so in der Nase 9 gehalten.

Gegenüber dem Stand der Technik, nach dem, wie beschrieben, zur Sicherung des Belaghaltebügels mehrere Sicherungsteile erforderlich sind, kann auf solche Sicherungsteile bei dem neuen Belaghaltebügel 10 prinzipiell verzichtet werden.

Zur Vermeidung einer durch Betriebsbelastung oder Materialermüdung möglichen Aufspreizung der Schenkel 12 ist bei dem in der Figur 4 gezeigten Ausführungsbeispiel des Belaghaltebügels 10 eine die parallelen Schenkel 12 miteinander verbindende Klammer 15 vorgesehen, die zwei, die Schenkel 12 teilweise umgreifende Klammerrinnen 16 aufweist, die im Sinne eines Klipses fungieren, wobei diese Klammer 15 nach Montage des Belaghaltebügels 10 aufgesetzt wird.

### Bezugszeichenliste

- 1: Bremssattel
- 2: Montageöffnung
- 3: Bremsbelag
- 4: Belagträgerplatte
- 5: Reibbelag
- 6: Bremsscheibe
- 7: Belaghaltefeder
- 8: Tasche
- 9: Nase
- 10: Belaghaltebügel
- 11: Querbohrung
- 12: Schenkel
- 13: Steg
- 14: Stummel
- 15: Klammer
- 16: Klammerrinne

## Patentansprüche

1. Bremsbelaghalterung einer Scheibenbremse, insbesondere für ein Nutzfahrzeug, wobei beidseitig einer Bremsscheibe (6) zugeordnete Bremsbeläge (3) mittels jeweils einer, sich quer zur Achsrichtung der Bremsscheibe (6) erstreckenden und am Bremsbelag (3) radial auslenkbaren Belaghaltefeder (7) federbelastet in einem Belagschacht eines ortsfesten Bremsträgers oder eines Bremssattels (1) gehalten sind und an denen sich ein in Achsrichtung der Bremsscheibe (6) erstreckender, am Bremssattel (1) befestigter Belaghaltebügel (10) abstützt, der aus einem gebogenen Draht besteht, **dadurch gekennzeichnet, dass** der Belaghaltebügel (10) zwei parallel und abständig zueinander angeordnete Schenkel (12), einen diese endseitig miteinander verbindenden Steg (13) sowie gegenüberliegend zwei zueinander gerichtete, abgewinkelte Stummel (14) aufweist, wobei der Belaghaltebügel (10) mit seinem stegseitigen Ende in einer Tasche (8) des Bremssattels (1) verschiebegesichert einliegt und die Stummel (14) in Querbohrungen (11) einer Nase (9) des Bremssattels (1) eingesteckt sind.

2. Bremsbelaghalterung nach Anspruch 1, **dadurch gekennzeichnet, dass** der Draht ein Federdraht ist.

3. Bremsbelaghalterung nach Anspruch 1 oder 2, **dadurch gekennzeichnet, dass** mit den Schenkeln (12) eine diese verbindende Klammer (15) aufgesetzt ist.

4. Bremsbelaghalterung nach Anspruch 3, **dadurch gekennzeichnet, dass** die Klammer (15) jedem Schenkel (12) zugeordnet eine Klammerrinne (16) aufweist.

5. Bremsbelaghalterung nach Anspruch 4, **dadurch gekennzeichnet, dass** die Klammerrinnen (16) die Schenkel (12) teilweise umgreifen.

6. Bremsbelaghalterung nach einem der Ansprüche 3 bis 5, **dadurch gekennzeichnet, dass** die Klammer (15) auf die Schenkel (12) nach einer Montage des Belaghaltebügels (10) aufgeklipst ist.

7. Bremsbelaghalterung nach einem der vorhergehenden Ansprüche, **dadurch gekennzeichnet, dass** die Stummel (14) seitlich der Nase (9) in die Querbohrungen (11) eingesteckt sind.

## Claims

1. Brake-pad holding arrangement of a disc brake, in particular for a utility vehicle, wherein brake-pads (3) associated with each side of a brake disc (6) are held by means of in each case a brake-pad holding spring (7) that extends transversely to the axial direction of the brake disc (6) and can be deflected radially on the brake-pad (3) and is spring-loaded in a brake-pad shaft of a positionally fixed brake carrier or brake caliper (1), against which a brake-pad holding stirrup (10) that extends in the axial direction of the brake disc (6) and is fixed to the brake caliper (1) rests, the said stirrup consisting of a bent wire,
**characterised in that** the brake-pad holding stirrup (10) has two arms (12) arranged parallel to and a distance apart from one another, a web (13) that connects these at the end with one another, and opposite one another two angled stumps (14) directed towards one another, wherein with its web-side ends the brake-pad holding stirrup (10) is located in a pocket (8) of the brake caliper (1), secured against displacement, and the stumps (14) are plugged into transverse bores (11) of a projection (9) of the brake caliper (1).

2. Brake-pad holding arrangement according to Claim 1, **characterised in that** the wire is a spring wire.

3. Brake-pad holding arrangement according to Claims 1 or 2, **characterised in that** a clip (15) that connects the arms (12) is fitted on them.

4. Brake-pad holding arrangement according to Claim 3, **characterised in that** the clip (15) associated with each arm (12) has a clip groove (16).

5. Brake-pad holding arrangement according to Claim 4, **characterised in that** the clip grooves (16) partially surround the arms (12).

6. Brake-pad holding arrangement according to any of Claims 3 to 5, **characterised in that** the clip (15) is clipped onto the arms (12) after the assembly of the brake-pad holding stirrup (10).

7. Brake-pad holding arrangement according to any of the preceding claims, **characterised in that** the stumps (14) on the side of the projection (9) are plugged into the transverse bores (11).

## Revendications

1. Fixation de garniture de frein d'un frein à disque, notamment pour un véhicule utilitaire, dans lequel des garnitures (3) de frein, associées aux deux côtés d'un disque (6) de frein, sont retenues en étant soumises à un ressort dans un puits de garniture d'un support de garniture fixe ou d'un étrier (1) de frein, au moyen chacune d'un ressort (7) de maintien de garniture, s'étendant transversalement à la direction axiale du disque (6) de frein et pouvant être déviées radialement à la garniture (3) de frein et sur lesquelles s'appuie un étrier (10) de support de garniture, s'étendant dans la direction axiale du disque (6) de frein, fixé à l'étrier (1) de frein et constitué d'un fil métallique coudé, **caractérisé en ce que** l'étrier (10) de support de garniture a deux branches (12) parallèles et à distance l'une de l'autre, une âme (13) les reliant du côté de l'extrémité, ainsi qu'à l'opposé deux moignons (14) coudés en étant dirigés l'un vers l'autre, l'étrier (10) de support de garniture étant inséré, sans pouvoir coulisser, par son extrémité du côté de l'âme, dans une poche (8) de l'étrier (1) de frein, et les moignons (14) étant enfilés dans des trous (11) transversaux d'un bec (9) de l'étrier (1) de frein.

2. Fixation de garniture de frein suivant la revendication 1, **caractérisée en ce que** le fil métallique est un fil pour ressort.

3. Fixation de garniture de frein suivant la revendication 1 ou 2, **caractérisée en ce que**, sur les branches (12), est mis un crampon (15) les reliant.

4. Fixation de garniture de frein suivant la revendication 3, **caractérisé en ce que** le crampon (15) a une gorge (16) associée à chaque branche (12).

5. Fixation de garniture de frein suivant la revendication 4, **caractérisée en ce que** les gorges (16) du crampon enserrent les branches (12), au moins en partie.

6. Fixation de garniture de frein suivant l'une des revendications 3 à 5, **caractérisée en ce que** le crampon (15) est clipsé sur les branches (12) après un montage de l'étrier (10) de support de garniture.

7. Fixation de garniture de frein suivant l'une des revendications précédentes, **caractérisée en ce que** les moignons (14) sont enfilés latéralement au bec (9) dans les trous (11) transversaux.
